# EUROPEAN PATENT APPLICATION

(11) **EP 1 253 673 A2**
(43) Date of publication of application: **30.10.2002**
(21) Application number: 02009152.6
(22) Date of filing: 24.04.2002
(51) Int. Cl.: H01R 13/22, H02J 7/00

(54) **Charge contacts for rechargeable device**

(30) Priority: 24.04.2001 US 841362
(71) Applicant: Wahl Clipper Corporation, Sterling Illinois 61081-0578 (US)
(72) Inventor: Arndt, Steven W., Geneseo, Illinois 61254 (US)
(74) Representative: Wallinger, Michael, Dr.

(57) **Abstract**

A charge contact assembly for a rechargeable device (12) including a rechargeable unit (12) and a base unit (14), the rechargeable unit being engageable on the base unit for recharging, the contact assembly including at least one first contact (26) disposed on the rechargeable device (12), at least one second contact (44) disposed on the base unit (14), at least one of the first contact and the second contact being configured for causing a consistent wiping contact action upon engagement of the rechargeable unit with the base unit. Alternatively, a combination is provided of a rechargeable unit (12) and a base unit (14) configured for accommodating and recharging the rechargeable unit (12). The combination includes the rechargeable unit (12) having a charging end (22) and at least one first contact (26) associated with the charging end for receiving an electrical charge from the base unit, the base unit having a housing (28) defining a docking point (34) for receiving the rechargeable unit, the docking point having a second contact (44) configured for making electrical contact with the first contact (26), and the first and second contacts (26, 44) being configured for facilitating location of the rechargeable unit in the docking point.

## Description

### BACKGROUND OF THE INVENTION

The present invention relates generally to rechargeable electronic devices or appliances incorporating portable work units and corresponding recharging bases or stands, and more specifically to the interrelationship between corresponding electrical charging contacts of the work unit and the base unit.

Many conventional rechargeable electronic appliances, for example electronic hair trimmers or clippers, as well as shavers, telephones, powered hand tools, flashlights, and the like incorporate a rechargeable hand-held portable work unit which, when not in use, engages a stationary base unit which is electrically connected to a power supply, such as a household current. Upon engagement with the base unit, the batteries in the portable unit begin to recharge for the next use. This recharging is achieved by the electrical connection between the rechargeable unit and the base unit, and the connection is typically maintained through the physical engagement of corresponding metallic contacts located on both the rechargeable unit and the base unit. Typically there are two such contacts on each device, which are located in adjacent relationship to each other.

One problem encountered with existing rechargeable electronic devices or appliances is that the contacts on the rechargeable unit are usually planar or flat, and the contacts on the base unit are flat or radiused to form an inverted "U"-shape. Further, the contacts on the base unit are biased against the rechargeable unit, such as by inherent spring force built into the contact members in the base unit. With existing designs there is little or no wiping action in some cases. After prolonged use, it has been found that due to the relatively limited surface engagement between the contacts, oxidation develops on the contacts which interferes with the electrical connection. Eventually, positive electronic connections are no longer achieved between the rechargeable unit and the base unit.

Upon closer examination, it has been found that the engagement or location and wiping of the conventional rechargeable units upon the base units is inconsistent between respective contacts. However, such wiping action occurs principally through downward deflection of the contacts on the base unit. It has been found that this arrangement results in intermittent wiping action, possibly due to the variability in the spring force of the contacts on the base unit. This variability may also be due to inadequate weight of the rechargeable unit which inadequately deflects the base unit contacts downward. A bouncing "diving board" effect or spring contact oscillation on the base unit contacts is caused by placement of the rechargeable unit on the base unit. Also, misalignment of the rechargeable unit to the base unit will inhibit wiping. In any event, the wiping action of existing contact designs is inconsistent and unreliable to the extent that contact oxidation can still occur.

Another problem with existing rechargeable electronic devices or appliances is that the base must be designed so that when the rechargeable unit is placed on the base, the rechargeable unit is located relative to the base unit so that the respective contacts are in alignment to ensure effective recharging. Existing contact configuration makes this location and the corresponding alignment difficult to achieve in many applications.

Thus, there is a need for an improved charge contact apparatus for a rechargeable electronic device or appliance which provides positive electrical connection while preventing oxidation with extended use. There is also a need for an improved charge contact apparatus for a rechargeable electronic device or appliance which facilitates the physical location of the rechargeable unit upon the base unit for effective recharging.

### BRIEF SUMMARY OF THE INVENTION

The above-listed drawbacks of conventional rechargeable electric appliances are addressed by the present charge contacts for a rechargeable device which features a mating configuration between corresponding opposed contacts on the rechargeable unit and the base unit. The contacts are designed so that the action of inserting the rechargeable unit upon the base unit causes an enhanced and more consistent relative wiping action of the contacts to prevent oxidation and maintain positive electrical connection for effective recharging. In addition, the configuration of the contacts is such that they also perform a locating function which facilitates the proper location of the rechargeable unit upon the base unit. Thus, the rechargeable unit is more easily positioned upon the base unit for recharging and more secure retention on the base unit.

More specifically, the present invention provides a charge contact assembly for a rechargeable device including a rechargeable unit and a base unit, the rechargeable unit being engageable on the base unit for recharging. The contact assembly includes at least one first contact disposed on the rechargeable device, at least one second contact disposed on the base unit, at least one of the at least one first contact and the at least one second contact being configured for causing a consistent wiping contact action between the first and second contacts upon engagement of the rechargeable unit with the base unit.

In an alternate embodiment, a combination is provided of a rechargeable unit and a base unit configured for accommodating and recharging the rechargeable unit when the base unit is connected to a power supply. The combination includes the rechargeable unit having a charging end and at least one first contact associated with the charging end for receiving an electrical charge from the base unit, the base unit having a housing defining a docking point for receiving the rechargeable unit, the docking point having at least one second contact configured for making electrical contact with the at least one first contact. At least one of the first and second contacts is configured for facilitating location of the rechargeable unit in the docking point.

### BRIEF DESCRIPTION OF THE SEVERAL VIEWS OF THE DRAWINGS

FIG. 1 is an exploded perspective view of a rechargeable unit and a base unit suitable for incorporation of the present charge contact assembly;
FIG. 2 is a perspective elevational view of the rechargeable unit and base unit of FIG. 1 shown in the engaged position;
FIG. 3 is an end view of a rechargeable unit equipped with the present charge contacts;
FIG. 4 is a cross-section taken along the line 4-4 of FIG. 2 and in the direction generally indicated;
FIG. 5 is a fragmentary enlarged portion of the circle 5 of FIG. 4;
FIG. 6 is a first alternate to the embodiment of FIG. 5; and
FIG. 7 is a second alternate to the embodiment of FIG. 5.

### DETAILED DESCRIPTION OF THE INVENTION

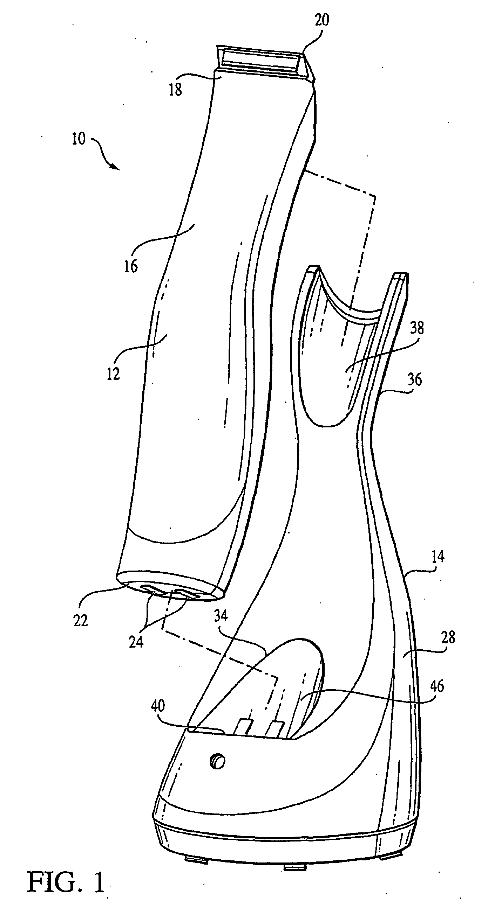

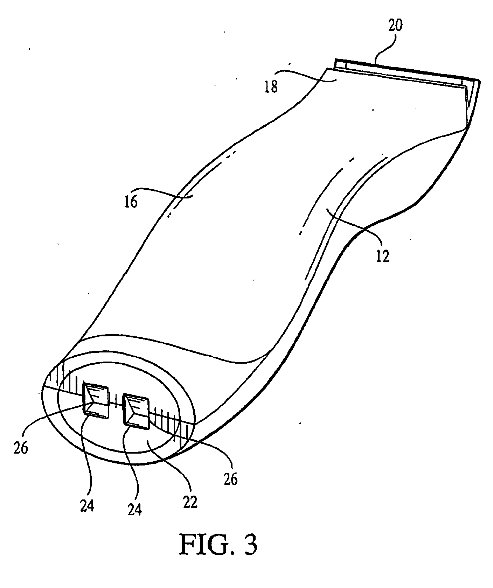

Referring now to FIGs. 1-3, a rechargeable device is generally designated 10, and includes a preferably portable rechargeable unit 12 and a preferably stationary base unit 14 upon which the rechargeable unit is engaged for recharging purposes. As illustrated, the rechargeable unit 12 is a hair trimmer, however the present invention is contemplated as being utilized with other rechargeable electric devices or appliances, including, but not limited to shavers, flashlights, hand-held power tools, telephones and other appliances employing hand-held portable units and recharging base units or stands.

The rechargeable unit 12 includes a housing 16 with a working end 18, here equipped with a bladeset 20. Opposite the working end 18 is a charging end 22. In the preferred embodiment, the charging end 22 has a pair of holes or apertures 24 which provide access for at least one and preferably two contacts 26, which in the present application will be referred to as first contacts. It is contemplated that the number and positioning of the first contacts 26 on the housing 16 will vary to suit the application. In the preferred embodiment, the apertures 24 are formed by opposing halves of the housing 16 as is known in the art, however other aperture configurations available to designers in the art are contemplated.

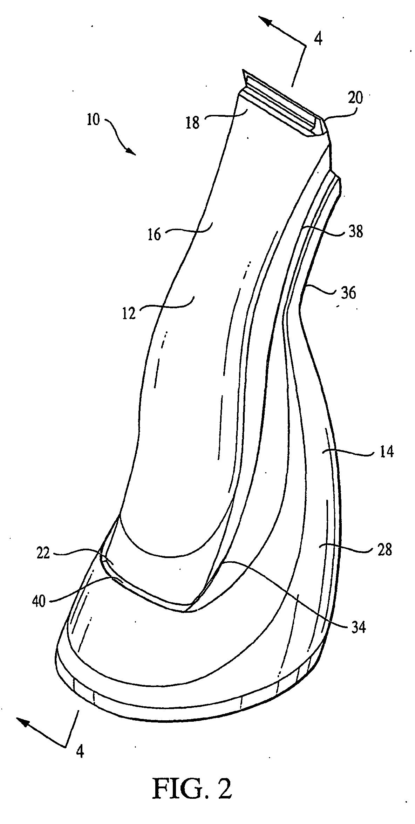

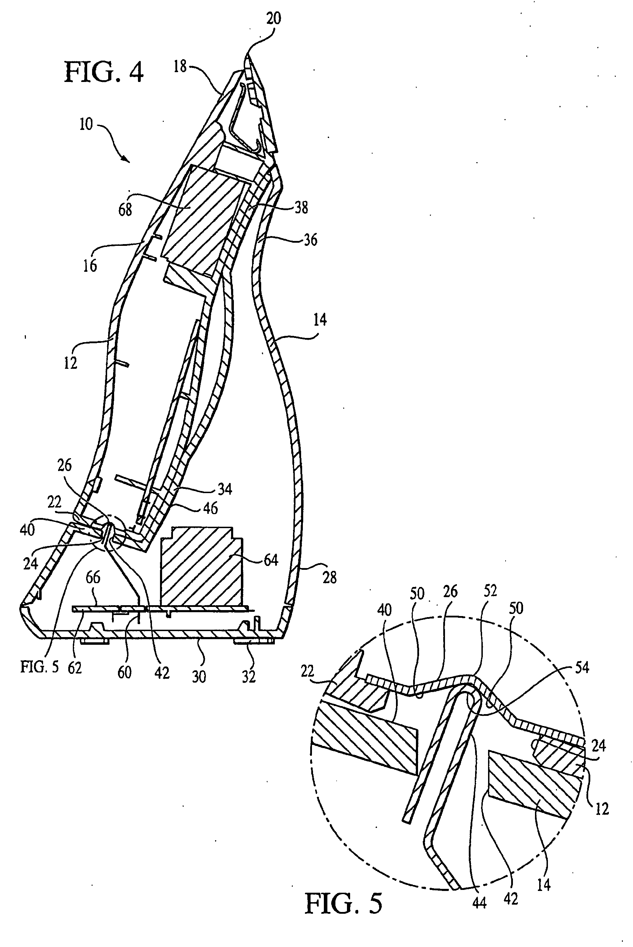

Referring now to FIGs. 4 and 5, the base unit 14 includes a housing 28 having a bottom 30 provided with at least one foot 32 (best seen in FIG. 4) for supporting the base unit upon a substrate such as a table or shelf. Another feature of the housing 28 is that it defines a docking point 34, preferably a docking recess, for receiving the rechargeable unit 12. An upper end 36 of the housing 28 is preferably provided with a cradle formation 38 which supports the working end 18 (best seen in FIG. 2). Included on the docking recess 34 is a floor 40 which is provided with at least one and preferably two contact holes or apertures 42 through which are accessible a corresponding at least one, and preferably two second contacts 44. In the preferred embodiment, the floor 40 is inclined to facilitate retention of the rechargeable unit 12 in the base unit 14.

While, in the preferred embodiment, there are two second contacts 44 projecting vertically through the contact apertures 42, it is contemplated that the number and positioning of the contacts may vary to suit the application, provided that there is at least one contact 44 constructed and arranged for making physical and electrical contact with a corresponding first contact 26. In this context, it is also contemplated that the second contacts 44 need not project through the contact apertures 42, but may be flush or recessed within the apertures, depending on the configuration of the first contacts 26. As is known in the art, the contact apertures 42 are dimensioned to restrict the movement of the second contacts 44 toward the cradle 38 when the rechargeable unit 12 is not engaged with the base unit 14.

In addition to the floor 40, the docking recess 34 includes a curved wall 46 (best seen in FIG. 1) which preferably corresponds to the curvature of the housing 16 of the rechargeable unit 12. As such, the docking recess 34 forms a receptacle for the charging end 22. An important advantage of the present configuration of the contacts 26,44 is that the contacts perform a locating function for the rechargeable unit 12 upon the base unit 14. As such, the housing 28 of the base unit 14 need not provide as much structural support for the resting rechargeable unit 12 as in prior art base units. This allows the present base unit 14 to be provided in an aesthetically pleasing configuration, with the curved wall 46 being smaller than in conventional base units.

Referring now to FIGs. 4 and 5, an important feature of the present charge contact assembly is that at least one of the first contacts 26 and the second contacts 44 are configured for causing an enhanced, more consistent wiping contact action between the first and second contacts upon engagement of the rechargeable unit 12 with the base unit 14. In the context of this application "consistent" wiping refers to the fact that the first and second contacts 26,44 are configured such that each time the rechargeable unit 12 is placed upon the base unit 14 for recharging, there is relative wiping action between the contacts. This is in contrast to prior art devices, in which the wiping action was intermittent, sporadic or otherwise unreliable to the extent that contact oxidation still occurred. In the preferred embodiment, the wiping engagement is created by the first contacts 26 defining at least one inclined surface 50, and the second contacts wipingly engaging the first contacts upon engagement of the rechargeable unit 12 upon the base unit 14. More specifically, while other configurations are contemplated, as described in more detail below, the preferred engagement is a mating one between the first and second contacts 26,44, with the first contacts defining an inverted "V"- shape through the intersection of a pair of the inclined surfaces 50 to form a point 52 (best seen in FIG. 5). The inverted "V"-shape narrows toward the working end 18. At least one and preferably each of the second contacts 44 are preferably fully radiused or at least radiused at a point 54 to form an inverted "U"-shape which nests, or is easily located within, the point 52.

As is known in the art, the second contacts 44 are preferably elongate, spring-biased members which are made to exert a biasing force against the first contacts 26 upon engagement of the rechargeable unit 12 and the base unit 14. Due to the inclined configuration of the first contacts 26, as the rechargeable unit 12 is placed upon the base unit 14 (best seen in FIG. 1), just prior to resting the rechargeable unit in place, the point 54 of at least one, and preferably both of the second contacts 44 slidingly and wipingly engages the inclined surface 50 of the corresponding first contact 26 to prevent the formation of oxidation which interferes with maintaining positive electrical contact.

The preferred inclined construction of the first contacts 26 also facilitates the location of the rechargeable unit 12 upon the base unit 14 so that the desired positive electrical connection may be achieved. Even if the rechargeable unit 12 is initially placed upon the base unit 14 at an odd angle or otherwise misaligned, the interaction of the spring-biased second contacts 44 against the inclined surfaces 50 of the first contacts ensures the desired positive electrical connection. This construction also prevents sliding of the rechargeable 12 on the base unit 14, and as such addresses a design consideration of such base units.

While the preferred configuration of the first and second contacts 26,44 has been described above, it is contemplated that other contact configurations may be provided which achieve the same benefits of positive electrical connection and physical location. On a fundamental level, at least one and preferably both of the first contacts 26 in the corresponding pairs of first and second contacts 26,44 is non-planar, which is distinct from the case in prior art rechargeable devices, the latter promoting oxidation of the contacts as described above.

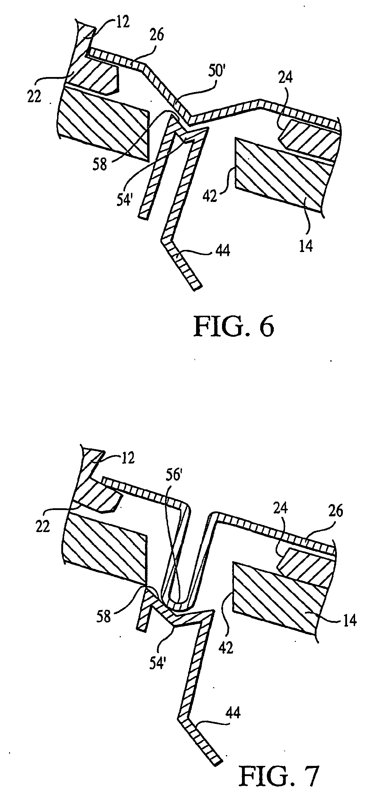

Referring now to FIGs. 6 and 7, while it is preferred that the first contacts 26 include at least one inclined surface 50 which is inclined toward the working end 18, it is also contemplated that the at least one inclined surface 50, indicated here as 50', may alternatively be inclined toward or from the charging end 22, even extending beyond the charging end to engage a partially or totally recessed portion 54' of the second contact 44 on the base unit 14. Accordingly, the second contacts 44, instead of being radiused, may in some cases also have inclined portions 54' which are configured to mate with the extending inclined portions of the first contacts 26, as long as a wiping action is achieved between the respective contacts upon engagement of the rechargeable unit 12 with the base unit 14. As best seen in FIG. 7, it is also contemplated that the first contacts 26 may also be radiused at 56' in the same manner as the second contacts 44, and engage inclined surfaces 58 on the second contacts 44 (FIG. 7).

Referring again to FIG. 4, it is preferred that the second contacts 44 are elongate, inherently spring-biased members having a lower end 60 which is physically and electrically connected to a printed circuit or "pc" board 62. As is well known in the art of recharging base units 14, the circuit board 62 has a transformer 64 and other elements of an electrical circuit on an upper surface 66. Also, while other types of rechargeable units 12 are contemplated, the preferred embodiment depicts a hair trimmer, which is provided with a motor 68 for driving the bladeset 20 through an eccentric linkage (not shown). The operation of a trimmer of the type suitable for the present invention is disclosed in greater detail in U.S. Patent Nos. 5,068,966 and 5,606,799 which are incorporated by reference herein.

Thus, it will be seen that the present charge contact assembly 26, 44 is constructed to provide a consistent mutual wiping action between the contacts upon engagement of the rechargeable unit 12 with the base unit 14. This wiping action, which may be obtained with a variety of configurations, maintains the contacts in good condition and prevents the formation of unwanted oxidation. In addition, the mating configuration of the charge contacts 26, 44 also provides a locating function which helps retain the rechargeable unit 12 upon the base unit 14.

While a particular embodiment of the charge contacts for rechargeable device of the invention has been shown and described, it will be appreciated by those skilled in the art that changes and modifications may be made thereto without departing from the invention in its broader aspects and as set forth in the following claims.

## Claims

1. A combination of a rechargeable unit (12) and a base unit (14) configured for accommodating and recharging said rechargeable unit when said base unit is connected to a power supply, said combination comprising:
said rechargeable unit (12) having a charging end (22) and at least one first contact (26) associated with said charging end for receiving an electrical charge from said base unit (14);
said base unit (14) having a housing (28) defining a docking point (34) for receiving said rechargeable unit (12), said docking point having at least one second contact (44) configured for making electrical contact with said at least one first contact (26); and at least one of said first and second contacts (26,44) being configured for facilitating location of said rechargeable unit (12) in said docking point (34).

2. The combination of claim 1 wherein said at least one of said first and second contacts (26, 44) are also configured for wiping engagement with each other upon the location of said rechargeable unit in said docking point for facilitating electrical connection between said base unit and said rechargeable unit.

3. The combination of claim 1 wherein said base unit (14) also includes an upper support formation (36) for supporting said rechargeable unit on said base.

4. The combination of claim 1 wherein said base unit (14) is provided with a pair of openings (42) through which said second contacts (44) are accessible, said openings being dimensioned to restrict the movement of said second contacts to facilitate positive engagement with said first contacts (26).

5. The combination of claim 1 wherein corresponding ones of said first and second contacts (26,44) are configured for mating, wiping engagement for facilitating the establishment of an electrical connection there between.

6. The combination of claim 1 wherein said docking point (34) includes an inclined floor (40) configured for facilitating retention of the rechargeable unit (12) upon said base unit.

7. A charge contact assembly for a rechargeable device including a portable rechargeable unit (12) and a stationary base unit (14), the rechargeable unit being engage able on the base unit for recharging, said contact assembly comprising:
a pair of first contacts (26) disposed on the rechargeable device (12);
a pair of second contacts (44) disposed on the base unit (14);
at least one of said first contacts (26) and said second contacts (44) being configured for causing a wiping contact action between said first and second contacts upon engagement of the rechargeable unit (12) with the base unit (14), said wiping engagement being created by said first contacts (26) defining at least one inclined surface (50), and said second contacts (44) wipingly engaging said first contacts (26) upon engagement of the rechargeable unit (12) upon the base unit (14).

8. A charge contact assembly for a rechargeable device including a rechargeable unit (12) and a base unit (14), the rechargeable unit being engageable on the base unit for recharging, said contact assembly comprising:
at least one first contact (26) disposed on the rechargeable device (12);
at least one second (44) contact disposed on the base unit (14);
at least one of said at least one first contact (26) and said at least one second (44) contact being configured for causing a consistent wiping contact action between said first and second contacts upon engagement of the rechargeable unit with the base unit.

9. The assembly of claim 8 wherein said configuration of said first and second contacts (26, 44) facilitates location of the rechargeable unit (12) on the base unit (14).

10. The assembly of claim 8 wherein said configuration of said first and second contacts creates a mating engagement.

11. The assembly of claim 8 wherein at least one of said first contacts (26) is non-planar.

12. The assembly of claim 8 wherein said first contacts (26) define at least one inclined surface (50).

13. The assembly of claim 8 wherein the rechargeable unit (12) has a working end (18) and a charging end (22), and at least one of said first contacts (26) has at least one inclined surface (50) which is inclined toward said working end (18).

14. The assembly of claim 8 wherein at least one of said contacts (44) on the base unit (14) has at least one inclined surface for providing a wiping engagement with said contacts of the rechargeable unit.

15. The assembly of claim 8 wherein at least one of said contacts (26,44) on at least one of the base unit (14) and the rechargeable unit (12) has a radiused configuration.

16. The assembly of claim 8 wherein said wiping engagement is achieved by engagement of a radiused contact with an inclined surface contact.

17. The assembly of claim 8 wherein said wiping engagement is achieved by engagement of two inclined surfaces (50, 54).

18. The assembly of claim 8 wherein each of said at least one first contacts forms an inverted "V"-shape which narrows toward a working end of said rechargeable unit.

19. The assembly of claim 8 wherein each of said at least one first contacts forms a "V"-shape which narrows from a charge end of said rechargeable unit.
